**Europäisches Patentamt**

**European Patent Office**

**Office européen des brevets**

(11) Veröffentlichungsnummer: **0 029 135**
**A1**

(12) ## EUROPÄISCHE PATENTANMELDUNG

(21) Anmeldenummer: **80106559.0**

(22) Anmeldetag: **25.10.80**

(51) Int. Cl.³: **H 04 M 1/58**

(30) Priorität: **16.11.79 DE 2946305**

(43) Veröffentlichungstag der Anmeldung: **27.05.81**
**Patentblatt 81/21**

(84) Benannte Vertragsstaaten: **AT BE CH FR GB IT LI NL**

(71) Anmelder: **Licentia Patent-Verwaltungs-GmbH, Theodor-Stern-Kai 1, D-6000 Frankfurt/Main 70 (DE)**

(72) Erfinder: **Rall, Bernhard, Dipl.-Ing., Albecker Steige 67, D-7900 Ulm (DE)**

(74) Vertreter: **Schickle, Gerhard, Dipl.-Ing., Licentia Patent-Verwaltungs-GmbH Theodor-Stern-Kai 1, D-6000 Frankfurt/Main 70 (DE)**

(54) **Impedanzschaltung mit steuerbarem Widerstandswert.**

(57) Zur Realisierung einer Impedanzschaltung, dessen Widerstandswert sich in Abhängigkeit vom Schleifenstrom eines Fernsprechapparates so ändert, daß sie als Nachbildung in Fernsprechapparaten mit elektronischer Verstärkungsregelung geeignet ist, ist eine steuerbare Stromspiegelschaltung vorgesehen, die aus einem in Emitterschaltung betriebenen Transistor (3) besteht, dessen Steuerstrecke die Reihenschaltung eines als Diode wirkenden Halbleiter-Elementes (4) mit einer steuerbaren Spannungsquelle (51, $I_{52}$) parallel geschaltet ist, wobei das als Diode wirkende Halbleiter-Element (4) an der Basis des in Emitterschaltung betriebenen Transistors (3) angeschlossen ist. Der Kollektor des in Emitterschaltung betriebenen Transistors (3) ist über einen Widerstand (6) mit seiner Basis verbunden und bildet den einen Eingang (1) der Impedanzschaltung. Der Emitter dieses Transistors (3) liegt auf Bezugspotential und bildet den anderen Eingang (2) der Impedanzschaltung.

Licentia Patent-Verwaltungs-GmbH
Theodor-Stern-Kai 1
D-6000 Frankfurt 70

NE2-UL/Sar/lh
UL 79/99
Aktz.: P 29 46 305.6

Beschreibung

"Impedanzschaltung mit steuerbarem Widerstandswert"

Es wird eine Impedanzschaltung mit steuerbarem Widerstandswert beschrieben, die insbesondere für Fernsprechapparate zur Kompensation der Mithörsignale geeignet ist. Die Schaltung besteht aus einer eine Gegenkopplung bewirkende Stromspiegelschaltung, deren Übersetzungsverhältnis durch den bei unterschiedlichen Längen der Teilnehmeranschlußleitung unterschiedlichen Schleifenstrom gesteuert wird.

Durch die DE-OS 27 07 870 ist eine steuerbare Stromspiegelschaltung bekannt geworden, deren Stromverhältnis durch eine steuerbare Spannungsquelle verändert und die zur/Verstärkungsregelung verwendet werden kann. Als steuerbare Impedanzschaltung ist sie jedoch nicht ohne weiteres einsetzbar, da sie am Ausgang eine Stromquelle aufweist.

In der Fernmeldetechnik sind jedoch insbesondere für die
Nachbildung in Fernsprechapparaten Wechselstromwiderstände
erforderlich, die sich in Abhängigkeit von der Länge der
Teilnehmeranschlußleitung so ändern, daß die Rückhördämpfung stets so groß ist, daß die vom Mikrofon abgegebenen
Nutzsignale nur schwach im Hörer des dem Mikrofon zugeordneten Fernsprechapparates zu hören sind. Zur Steuerung
derartiger Wechselstromwiderstände bietet sich der Schleifenstrom an, dessen Größe eine Funktion des Gleichstromwiderstandes und damit der Länge der Teilnehmeranschlußleitung ist.

Der Erfindung liegt daher die Aufgabe zugrunde, eine Impedanzschaltung mit steuerbarem Widerstandswert anzugeben,
die sich in Abhängigkeit vom Schleifenstrom eines Fernsprechapparates so ändert, daß sie als Nachbildung insbesondere in Fernsprechapparaten mit elektronischer Verstärkungsregelung möglichst gut geeignet ist. Sie soll sich
darüber hinaus monolithisch mit geringem Flächenbedarf integrieren lassen und möglichst keine nichtlinearen Verzerrungen erzeugen.

Die Aufgabe wird durch die im Anspruch 1 genannte Erfindung gelöst. Vorteilhafte Weiterbildungen und Ausgestaltungen der Erfindung sind in den Unteransprüchen angegeben.
Beispielsweise läßt sich bei Ausgestaltung der Erfindung
nach Anspruch 3 die Änderung des Widerstandswertes der Impedanzschaltung in Abhängigkeit des zu steuernden Schleifenstromes eine Schaltungsanordnung zur Verstärkungssteuerung, wie sie in der DE-OS 27 07 870 beschrieben ist, optimal anpassen.

Mit der Weiterbildung nach Anspruch 4 sind auch Blindkomponenten der Teilnehmeranschlußleitung nachbildbar, so daß
in Fernsprechapparaten mit elektrischer Verstärkungssteue-

- 3 -

rung die Rückhörbezugsdämpfung über den gesamten Leitungslängenbereich der Teilnehmeranschlußleitung von 0 bis 5 km besser als 20 dB gemacht werden kann.

Die Erfindung wird nun anhand von Zeichnungen und Ausführungsbeispielen näher erläutert. Es zeigen:

FIG. 1    Die erfindungsgemäße Impedanzschaltung mit steuerbarer Spannungsquelle;

FIG. 2    Die erfindungsgemäße Impedanzschaltung für Stromsteuerung;

FIG. 3    Die erfindungsgemäße Impedanzschaltung für Stromsteuerung mit abgewandelter Kennlinie;

FIG. 4    Eine Weiterbildung für die Nachbildung eines Fernsprechapparates;

FIG. 5    Ortskurven einer erfindungsgemäßen Impedanzschaltung;

FIG. 6    Vereinfachtes Blockschaltbild eines elektronischen Fernsprechapparates mit der erfindungsgemäßen Impedanzschaltung.

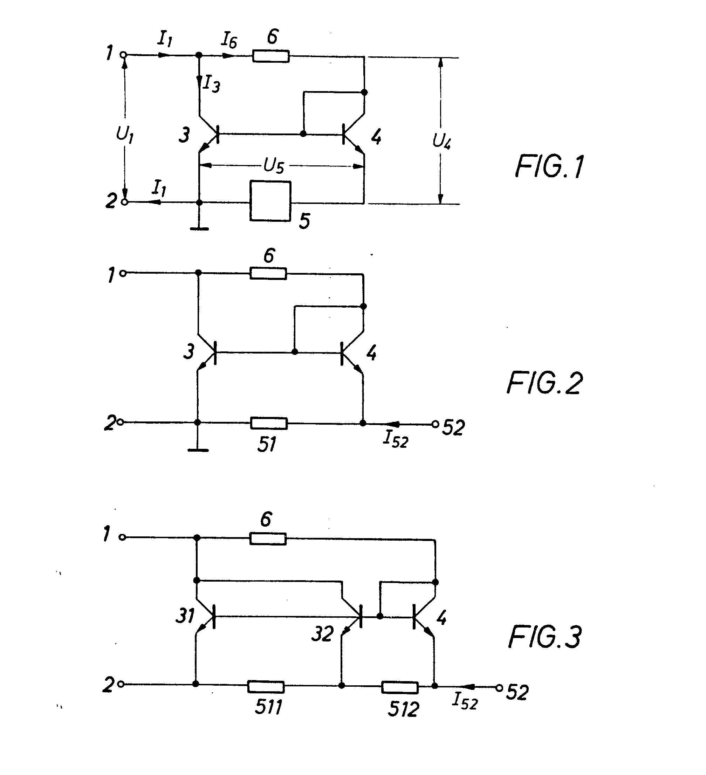

In FIG. 1 ist die erfindungsgemäße Impedanzschaltung mit steuerbarem Widerstand dargestellt. Sie enthält eine steuerbare Stromspiegelschaltung, die aus einem in Emitterschaltung betriebenen Transistor 3 besteht, dessen Steuerstrecke die Reihenschaltung eines als Diode wirkenden Halbleiter-Elementes 4 mit einer steuerbaren Spannungsquelle 5 parallel geschaltet ist, wobei das als Diode wirkende Halbleiter-Element 4 an der Basis des in Emitterschaltung betriebenen Transistors 3 angeschlossen ist. Die Steuerstrecke eines in Emitterschaltung betriebenen Transistors ist die Basis-Emitter-Strecke. Das als Diode wirkende Halbleiter-Element 4 läßt

- 4 -

sich in einfacher Weise als Transistor realisieren, dessen Kollektor mit der Basis verbunden ist. Dieses Element hat dann die gleichen Temperatureigenschaften wie der in Emitterschaltung betriebene Transistor 3.

Wie ferner der FIG. 1 zu entnehmen ist, ist der Kollektor des in Emitterschaltung betriebenen Transistors 3 mit der Eingangsklemme 1 der Impedanzschaltung verbunden und über einen Widerstand 6 mit seiner Basis. Der Emitter des in Emitterschaltung betriebenen Transistors 3 liegt auf Bezugspotential und ist mit der anderen Eingangsklemme 2 der Impedanzschaltung verbunden.

Ein über die Eingangsklemme 1 fließender Strom $I_1$ teilt sich auf in die Teilströme $I_6$ durch den Widerstand 6 und $I_3$ durch den Transistor 3. Der über den Widerstand 6 fliessende Teilstrom fließt im wesentlichen über das als Diode geschaltete Halbleiter-Element 4 - im folgenden kurz Diode genannt - und über die steuerbare Spannungsquelle 5 zur anderen Eingangsklemme 2. Die Summenspannung aus der Spannung $U_4$ an der Diode 4 und der Spannung $U_5$ an der steuerbaren Spannungsquelle 5 steuert den Transistor 3 derart aus, daß sein Kollektorstrom $I_3$ bei konstanter Spannung an der steuerbaren Spannungsquelle 5 dem Strom $I_6$ durch den Widerstand 6 proportional ist. Der Widerstandswert zwischen den Klemmen 1 und 2 der Schaltung ist somit:

$$R_1 = \frac{U_1}{I_1} = \frac{I_6 R_6 + U_4 + U_5}{I_6 + I_3}$$

Für Wechselstromanwendungen setzt die erfindungsgemäße Impedanzschaltung voraus, daß dem Wechselstrom ein Gleichstrom

0029135

überlagert ist, der stets größer als die maximal auftretende Wechselstromamplitude ist.

Für die Ermittlung des Wechselstromwiderstandswertes der Schaltung können die Spannungen $U_4$ und $U_5$ annähernd als konstant betrachtet werden, so daß für den Wechselstromwiderstandswert $r_1$ der Impedanzschaltung sich ergibt

$$r_1 = \frac{R_6}{1 + I_3/I_6}$$

Da sich das Verhältnis $I_3/I_6$ durch die steuerbare Spannungsquelle 5 steuern läßt, besitzt somit die Schaltung einen steuerbaren Wechselstromwiderstandswert, der etwas niedriger ist als der Gleichstromwiderstandswert. Für die Anwendung der erfindungsgemäßen Schaltung als Nachbildung in Fernsprechapparaten ist lediglich der Wechselstromwiderstandswert von Bedeutung.

Wie FIG. 2 zeigt, läßt sich die steuerbare Spannungsquelle 5 in einfacher Weise durch einen Widerstand 51 realisieren, in dessen Verbindungspunkt mit der Diode 4 ein Steuerstrom $I_{52}$ eingespeist wird. Als Steuerstrom $I_{52}$ ist beispielsweise ein vom Schleifenstrom abgeleiteter Gleichstrom geeignet.

Die Einspeisungsstelle für den Steuerstrom ist hier und in allen weiteren Figuren mit 52 bezeichnet. Je größer der Steuerstrom ist, um so kleiner sind sowohl Gleichstrom- als auch Wechselstromwiderstandswert der Schaltung, weil mit wachsender Basisspannung die Steilheit des Transistors 3 und damit die Gegenkopplung zunimmt.

FIG. 3 zeigt eine Ausgestaltung der erfindungsgemäßen Schaltung, die es erlaubt, den Wechselstromwiderstandswertverlauf der Schaltung zwischen den Klemmen 1 und 2 in Abhängigkeit vom Steuerstrom $I_{52}$ entsprechend den jeweiligen Erfordernissen zu variieren. Hierzu ist der in Emitterschaltung betriebene Transistor 3 mehrfach in Gestalt eines Multiemitter-Transistors 31 und 32 mit zusammengeschalteten Basiselektroden und zusammengeschalteten Kollektorelektroden ausgebildet. Ferner ist der Widerstand 51 in mindestens zwei Teilwiderstände 511 und 512 aufgeteilt, wobei der Verbindungspunkt der Teilwiderstände mit jeweils einem Emitter des Multiemitter-Transistors 31 und 32 verbunden sind. Im Ausführungsbeispiel gemäß FIG. 3 sind lediglich zwei Teilwiderstände dargestellt und der Multiemitter-Transistor besitzt lediglich zwei Emitter, von denen der eine wie in FIG.2 geschaltet ist und der zweite am Verbindungspunkt der Teilwiderstände 511 und 512 angeschlossen ist.

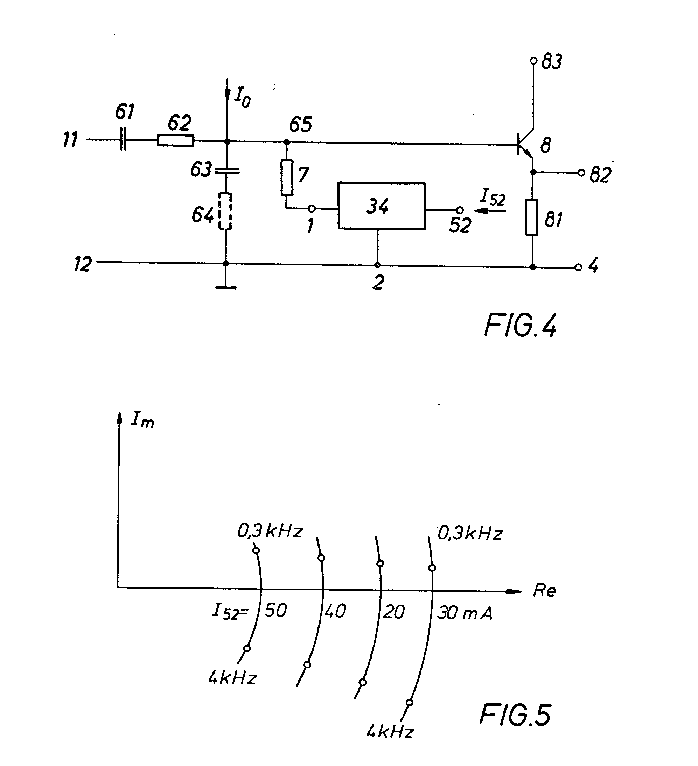

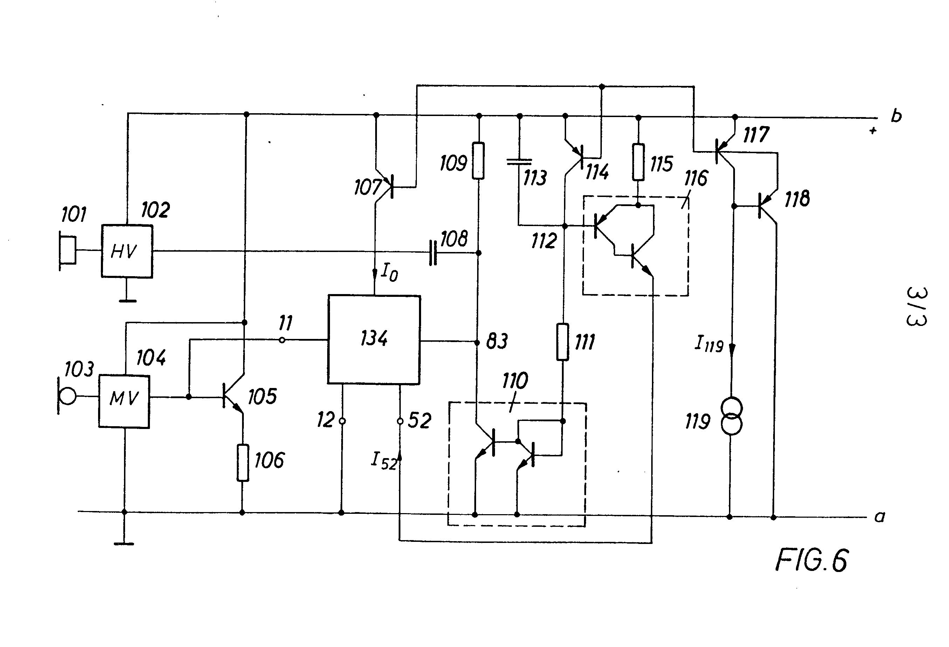

Für die Anwendung der erfindungsgemäßen Impedanzschaltung als Nachbildung in Fernsprechapparaten ist es ferner zweckmäßig, die Schaltung an den komplexen Widerstand der Teilnehmeranschlußleitung (vergl. FIG. 5) anzupassen. Dazu ist an den Schaltungen nach FIG. 2 oder FIG. 3 noch eine frequenzabhängige Schaltung anzuschließen, welche den Veränderungen der Eigenschaften einer Teilnehmeranschlußleitung in Abhängigkeit von ihrer Länge in gewünschter Weise folgt. Hierzu zeigt FIG. 4 eine vorteilhafte Weiterbildung.

Die erfindungsgemäße Impedanzschaltung z. B. nach FIG. 2 ist dort als Block 34 mit den Anschlußklemmen 1, 2 und 52 dargestellt. Die Anschlußklemme 2 ist mit dem Bezugspotential verbunden. In Reihe mit der Anschlußklemme 1 liegt ein Widerstand 7, der an eine Verbindungsleitung 65 angeschlossen ist. Der Widerstand 7 in Reihe mit dem Eingang der Schaltung 34 hat die Aufgabe, bei steigendem Steuerstrom $I_{52}$ den abfallenden Widerstandswert der Schaltung 34 auf einen gewünschten Wert zu begrenzen.

- 7 -

Die Nachbildung gemäß FIG. 4 hat die Eingangsklemme 11 und die Ausgangsklemme 82 und ihre elektrischen Eigenschaften sind über die Klemme 52 steuerbar.

Zwischen der Eingangsklemme 11 und der Verbindungsleitung 65 ist ein RC-Glied, bestehend aus der Reihenschaltung eines Kondensators 61 mit einem Widerstand 62 geschaltet. Zwischen der Verbindungsleitung 65 und der auf Massepotential liegenden Anschlußklemme 12 liegt zum einen ein Kondensator 63, dem zur besseren Frequenzgangkorrektur eventuell noch ein Widerstand 64 in Reihe geschaltet werden kann, zum anderen die Reihenschaltung des Widerstandes 7 mit der Schaltung 34 und ferner ein Transistor 8 in Kollektorschaltung, an dessen Emitterwiderstand 81 am emitterseitigen Ende die Ausgangsklemme 82 angeschlossen ist. Ferner ist in die Verbindungsleitung 65 eine schleifenstromunabhängige Einströmung $I_o$ vorgesehen, die, wie bereits zu FIG. 1 erläutert, nach der Größe des Wechselstromaussteuerbereichs bemessen ist.

Für die in FIG. 4 dargestellte Schaltung wurden beispielsweise folgende Werte gewählt

$$R_{62} = 3,9 \text{ k}\Omega \qquad C_{61} = 0,22 \text{ }\mu F \qquad I_o = 150 \text{ }\mu A$$
$$R_{64} = 560 \text{ }\Omega \qquad C_{63} = 20 \text{ nF}$$
$$R_7 = 2,2 \text{ k}\Omega$$

Die Werte der erfindungsgemäßen Impedanzschaltung 34 gemäß FIG. 2 waren

$$R_6 = 6 \text{ k}\Omega$$
$$R_{51} = 2 \text{ }\Omega$$

Für die Länge s der Teilnehmeranschlußleitung wurde für s = 0 km ein Steuerstrom $I_{52}$ = 50 mA und für s = 5 km $I_{52}$ = 0 mA eingestellt.

In FIG. 5 sind die Ortskurven dieser in FIG. 4 gezeigten Nachbildung dargestellt. Hierzu ist der Imaginärteil des Widerstandswertes der Nachbildung und dessen Realteil aufgetragen. Die Steuerströme $I_{52}$ = 40 mA gehören zu einer Teilnehmeranschlußleitung von s = 1 km und $I_{52}$ = 20 mA zu einer Leitungslänge s = 3 km. Die Frequenzabhängigkeit des Nachbildungswiderstandes beim jeweiligen Steuerstrom ergibt leicht gekrümmte, nahezu senkrecht zur reellen Achse verlaufende Ortskurven, in denen die Widerstandswerte bei 0,3 kHz und 4 kHz jeweils als Frequenzmarken eingetragen sind. Da die Ortskurven einer Teilnehmeranschlußleitung in gleicher Weise wie in FIG. 5 dargestellt verlaufen, ist die Nachbildung gemäß FIG. 4 mit Vorteil in elektronischen Fernsprechapparaten einsetzbar. Anstelle des Transistors 8 in Kollektorschaltung kann auch ein anderer Verstärker mit hohem Eingangswiderstand vorgesehen werden.

Die Schaltung nach FIG. 4 hat den besonderen Vorteil, daß sie sehr klirrarm ist. Bei einer Eingangswechselspannung an den Klemmen 11 und 12 von 180 mV liegt der Klirrfaktor an der Ausgangsklemme 32 im gesamten Regelbereich von $I_{52}$ = 0 bis 50 mA unter 1 %. Die erfindungsgemäße Impedanzschaltung 34 inklusive des Widerstandes 7 läßt sich ohne Schwierigkeiten monolithisch auf einem Halbleiter-Chip integrieren.

In FIG. 6 ist die Anwendung der gemäß FIG. 4 weitergebildeten Impedanzschaltung 134 in einem Fernsprechapparat, soweit es für das Verständnis der Schaltung erforderlich ist, ausführlich dargestellt. Das vom Mikrofon 103 kommende Signal wird im Mikrofonverstärker 104 verstärkt und als Nutzsignalstrom mittels des Transistors 105 in die Anschlußadern a und b

0029135

des Fernsprechapparates und damit der Teilnehmeranschlußleitung eingespeist. Am Ausgang des Mikrofonverstärkers
104 ist auch die Anschlußklemme 11 der erfindungsgemäßen
Impedanzschaltung 134 angeschlossen. Die konstante Einströmung $I_o$ erhält die Impedanzschaltung 134 aus dem Kollektor
eines Transistors 107, dessen Basis ebenso wie die eines
Transistors 114, von einer Schaltung mit den Bausteinen
117 bis 119 so gesteuert wird, daß die Kollektorströme der
Transistoren 107 und 114 konstant sind.

Mit 119 ist eine Konstantstromquelle bezeichnet, welche die
Basis eines Transistors 118 so weit aussteuert, bis der
Emitter des Transistors 118 die Basis eines Transistors 117
soweit aussteuert, bis der Kollektorstrom des Transistors
117 gleich dem Strom der Konstantstromquelle 119 ist. Zwischen Emitter und Basis des Transistors 117 entsteht auf
diese Weise eine Spannung, die geeignet ist, weitere Transistoren, beispielsweise die Transistoren 107 und 114, an
ihrer Basis so auszusteuern, daß deren Kollektorstrom konstant ist.

Der konstante Kollektorstrom des Transistors 114 bewirkt
im Widerstand 111 einen konstanten Spannungsabfall, so daß
unter Berücksichtigung des Spannungsabfalls an einem Stromspiegel 110 die Spannung zwischen Punkt 112 und der a-Ader
etwa 4 V beträgt. Unterschiedliche Anschlußspannungen zwischen den Klemmen a und b infolge unterschiedlicher Längen
der Teilnehmeranschlußleitungen verursachen dadurch unterschiedliche Spannungen zwischen der b-Ader und Punkt 112.
Diese in Abhängigkeit von der Länge der Teilnehmeranschlußleitung unterschiedliche Spannung wird von einer Schaltung
mit der Komplementärtransistorschaltung 160 mit Gegenkopplungswiderstand 115, deren Steuerstrecke durch einen Kondensator 113 für Wechselstrom überbrückt ist, in den ge-

0029135

wünschten Steuerstrom $I_{52}$ für die erfindungsgemäße Impedanz-schaltung134 umgesetzt.

Über den Kondensator 113 gelangt die Nutzwechselspannung der b-Ader über den Widerstand 111 und den Stromspiegel 117 als resultierender Spannungsabfall am Widerstand 109 über den Kondensator 108 zum Hörverstärker 102 und Hörer 101.

Die Nutzsignale des Mikrofonverstärkers 104, die über den Transistor 105 in die b-Ader eingespeist werden, sollen jedoch nicht über Kondensator 113, Widerstand 111, Stromspiegel 110 und Kondensator 108 zum Hörverstärker gelangen (unerwünschtes Mithören). Daher werden diese Signale von der am Ausgang des Mikrofonverstärkers 104 angeschlossenen erfindungsgemäße Impedanzschaltung134 am Punkt 83, wie bereits erläutert, kompensiert.

In diesem Anwendungsbeispiel wurden außer den bereits genannten folgende Bauelemente als günstig gefunden

$$R_{106} = 150\ \Omega \qquad R_{111} = 25\ k\Omega \qquad C_{113} = 10\ \mu F$$
$$R_{109} = 4\ k\Omega \qquad R_{115} = 12\ \Omega$$

Die Stromquelle 119 lieferte $I_{119} = 150\ \mu A$.

Licentia Patent-Verwaltungs-GmbH    NE2-UL/Sar/lh
Theodor-Stern-Kai 1    UL 79/99
D-6000 Frankfurt 70    Aktz.: P 29 46 305.6

## Patentansprüche

1. Impedanzschaltung mit steuerbarem Widerstandswert, insbesondere zur Kompensation des Mithörsignals für Fernsprechapparate, dadurch gekennzeichnet, daß sie eine steuerbare Stromspiegelschaltung enthält, die aus einem in Emitterschaltung betriebenen Transistor (3) besteht, dessen Steuerstrecke die Reihenschaltung eines als Diode wirkenden Halbleiter-Elementes (4) mit einer steuerbaren Spannungsquelle (5) parallel geschaltet ist, wobei das als Diode wirkende Halbleiter-Element (4) an der Basis des in Emitterschaltung betriebenen Transistors (3) angeschlossen ist,
daß der Kollektor des in Emitterschaltung betriebenen Transistors (3) der eine Eingang (1) der Impedanzschaltung ist und über einen Widerstand (6) mit seiner Basis verbunden ist und
daß der Emitter des in Emitterschaltung betriebenen Transistors (3) auf Bezugspotential liegt und der andere Eingang (2) der Impedanzschaltung ist.

2. Schaltung nach Anspruch 1, dadurch gekennzeichnet, daß die steuerbare Spannungsquelle (5) aus einem Widerstand (51) besteht, dessen Verbindungsstelle mit dem als Diode wirkenden Halbleiter-Element (4) Steueranschluß (52) zur Einspeisung eines Steuerstromes ($I_{52}$) ist.

3. Schaltung nach Anspruch 2, dadurch gekennzeichnet, daß der in Emitterschaltung betriebene Transistor (3) mehrfach in Gestalt eines Multiemitter-Transistors (31, 32) mit zusammengeschalteten Basiselektroden und zusammengeschalteten Kollektorelektroden ausgebildet ist und der Widerstand (51) in mindestens zwei Teilwiderstände (511, 512) aufgeteilt ist, wobei der (die) Verbindungspunkt(e) der Teilwiderstände mit jeweils einem Emitter des Multiemitter-Transistors (31, 32) verbunden ist (sind).

4. Schaltung nach einem der vorangegangenen Ansprüche, dadurch gekennzeichnet, daß in Reihe mit dem einen Eingang (1) ein ohmscher Widerstand (7) geschaltet ist.

5. Schaltung nach einem der vorangegangenen Ansprüche, dadurch gekennzeichnet, daß sie an eine frequenzabhängige Schaltung angeschlossen ist.

6. Schaltung nach einem der vorangegangenen Ansprüche, dadurch gekennzeichnet, daß sie als Nachbildung in einem Fernsprechapparat verwendet ist.

0029135

1/3

FIG.1

FIG.2

FIG.3

UL 79/99

FIG.4

FIG.5

FIG.6

| Europäisches Patentamt | **EUROPÄISCHER RECHERCHENBERICHT** | Nummer der Anmeldung |
|---|---|---|
| | | EP 80 10 6559 |

| | **EINSCHLÄGIGE DOKUMENTE** | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | FR - A - 2 382 131 (LICENTIA) <br> * Seite 4, Zeilen 14-39; Seite 7, Zeile 31 bis Seite 8, Zeile 7; Figuren 1,2 * | 1-3 | **H 04 M 1/58** |
| D | & DE - A - 2 707 870 | | |
| | -- | | |
| | US - A - 3 955 053 (PICARD) <br> * Spalte 2, Zeilen 27-56; Figur 2 * | 1 | |
| | ---- | | **RECHERCHIERTE SACHGEBIETE (Int. Cl.³)** |
| | | | H 04 M 1/58 <br> 1/76 <br> 1/60 |
| | | | **KATEGORIE DER GENANNTEN DOKUMENTE** <br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| Den Haag | 20-02-1981 | KEPPENS |

EPA form 1503.1  06.78